# EUROPEAN PATENT APPLICATION

(11) **EP 4 501 634 A1**
(43) Date of publication of application: **05.02.2025**
(21) Application number: 23779790.7
(22) Date of filing: 17.03.2023
(51) Int. Cl.: B32B 27/32, C09J 123/26, C09J 7/30

(54) **ADHESIVE FILM, METAL TERMINAL USING SAME, AND SECONDARY BATTERY**

(30) Priority: 28.03.2022 JP 2022051603
(71) Applicant: Fujimori Kogyo Co., Ltd., Tokyo 112-0002 (JP)
(72) Inventor: TAKEYAMA, Shunsuke, Tokyo 112-0002 (JP); KANEDA, Yasuhiro, Tokyo 112-0002 (JP); SAITO, Soshi, Tokyo 112-0002 (JP)
(74) Representative: Lavoix
(86) International application number: PCT/JP2023/010747
(87) International publication number: WO 2023/189774

(57) **Abstract**

An adhesive film (10) formed of a resin laminate has, on at least one surface of the adhesive film (10), an adhesive resin layer (11) containing a modified polyolefin resin modified with a functional group that forms a chemical bond with an adherend, and an adjacent layer (12) adjacent to the adhesive resin layer (11) and containing a polyolefin resin, and the adhesive resin layer (11) has a thickness of less than 10 µm**.**

## Description

### [Technical Field]

The present invention relates to an adhesive film, a metal terminal using the same, and a secondary battery.

Priority is claimed on Japanese Patent Application No. 2022-051603, filed March 28, 2022, the content of which is incorporated herein by reference.

### [Background Art]

In the related art, acid-modified polyolefin resins are known as materials with favorable adhesiveness with respect to adherends such as metals.

Patent Document 1 describes a multilayer sealing film in which the skin layer on at least one of the two surfaces of a core layer is formed of polypropylene modified with an unsaturated carboxylic acid or the like.

Patent Document 2 describes an adhesive film for a metal terminal in which, of the polyolefin resin layer on both sides of a substrate, at least one of the layers is formed of an acid-modified polyolefin.

Patent Document 3 describes an adhesive film for a metal terminal including at least one polypropylene layer and at least one acid-modified polypropylene layer.

### [Citation List]

### [Patent Document]

[Patent Document 1]
   PCT International Publication No. WO 2021/100226
[Patent Document 2]
   Japanese Unexamined Patent Application, First Publication No. 2017-139120
[Patent Document 3]
   PCT International Publication No. WO 2018/110702

### [Summary of Invention]

### [Technical Problem]

Since the acid-modified polyolefin resin has a functional group that can form a chemical bond with an adherend such as a metal, it is necessary to establish contact or adhesion between the adhesive resin and an adherend. In order to exhibit sealing performance for the adherend and stress alleviation during peeling, it is necessary to secure a sufficient thickness of the adhesive resin, and there is a problem of a low degree of freedom in design.

For example, in Examples 1 to 6 of Patent Document 1, the thickness of the acid-modified propylene random copolymer is **30 to 50 µm**. In Examples 1 to 3 of Patent Document 2, the thickness of the maleic acid-modified polypropylene is **37.5 µm**. In Examples 1 to 7 of Patent Document 3, the thickness of the acid-modified polypropylene is **16 to 36 µm**. In addition, paragraph 0054 of Patent Document 3 suggests that the thickness of the acid-modified polypropylene is preferably about **10 µm** or more.

The present invention has been made in view of the above circumstances, and an object of the present invention is to provide an adhesive film that forms a chemical bond with an adherend and allows strong adhesion, and has a degree of freedom in design, a metal terminal using the same and a secondary battery.

### [Solution to Problem]

A first aspect of the present invention provides an adhesive film formed of a resin laminate, having, on at least one surface of the adhesive film, an adhesive resin layer containing a modified polyolefin resin modified with a functional group that forms a chemical bond with an adherend; and
an adjacent layer adjacent to the adhesive resin layer and containing a polyolefin resin,
wherein the adhesive resin layer has a thickness of less than 10 **µm**.

In a second aspect of the present invention, the adjacent layer has a tensile elastic modulus of 1,000 MPa or less, in the first aspect.

In a third aspect of the present invention, the ratio B/A of the thickness B of the adjacent layer to the thickness A of the adhesive resin layer is 1 to 20 in the first or second aspect.

In a fourth aspect of the present invention, the modified polyolefin resin is an acid-modified polyolefin resin in any one of the first to third aspects.

In a fifth aspect of the present invention, the acid-modified polyolefin resin is a random copolymer of polypropylene or a resin modified from polyethylene in the fourth aspect.

In a sixth aspect of the present invention, the polyolefin resin of the adjacent layer is a random copolymer of unmodified polypropylene or unmodified polyethylene in any one of the first to fifth aspects.

In a seventh aspect of the present invention, the modified polyolefin resin is modified with an unsaturated carboxylic acid component, and contains 0.01 to 2 parts by weight of the unsaturated carboxylic acid component with respect to 100 parts by weight of the modified polyolefin resin in any one of the first to sixth aspects.

In an eighth aspect of the present invention, the adhesive film contains a thermoplastic elastomer resin in a range of 5 to 30 parts by weight with respect to 100 parts by weight of the adhesive resin layer in any one of the first to seventh aspects.

A ninth aspect of the present invention provides a metal terminal for a secondary battery, including the adhesive film according to any one of the first to eighth aspects.

A tenth aspect of the present invention provides a secondary battery including the metal terminal according to the ninth aspect.

### [Advantageous Effects of Invention]

According to the present invention, it is possible to provide an adhesive film that forms a chemical bond with an adherend and allows strong adhesion, and has a degree of freedom in design, a metal terminal using the same and a secondary battery.

### [Brief Description of Drawings]

FIG. 1 is a cross-sectional view showing an adhesive film according to a first embodiment.
FIG. 2 is a cross-sectional view showing an adhesive film according to a second embodiment.
FIG. 3 is a cross-sectional view showing an adhesive film according to a third embodiment.
FIG. 4 is a cross-sectional view showing an adhesive film according to a fourth embodiment.

### [Description of Embodiments]

Hereinafter, the present invention will be described with reference to preferred embodiments.

An adhesive film according to an embodiment is formed of a resin laminate, and has, on at least one surface, an adhesive resin layer containing a modified polyolefin resin modified with a functional group that forms a chemical bond with an adherend, and an adjacent layer adjacent to the adhesive resin layer and containing a polyolefin resin. In addition, the thickness of the adhesive resin layer is less than **10 µm**.

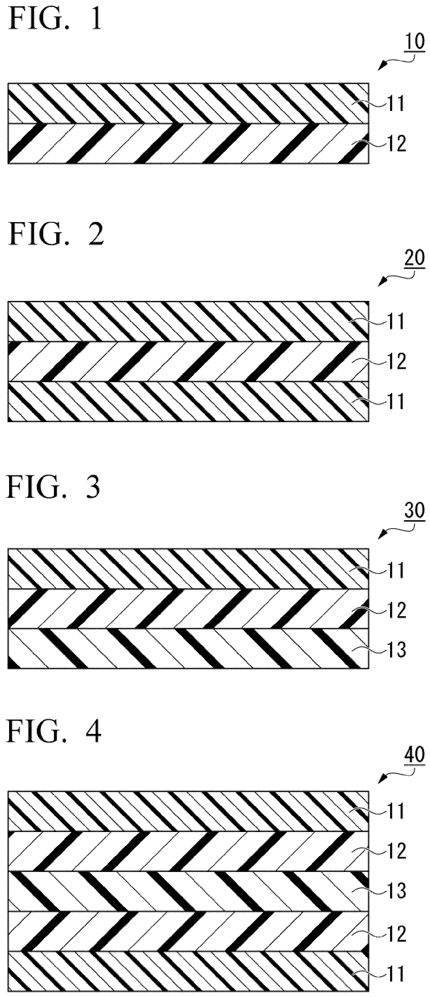

The adhesive film according to the embodiment may be a laminate having an adhesive resin layer and an adjacent layer. For example, an adhesive film 10 shown in FIG. 1 has an adhesive resin layer 11 on one surface of an adjacent layer 12. An adhesive film 20 shown in FIG. 2 has the adhesive resin layer 11 on both surfaces of the adjacent layer 12.

The adhesive film according to the embodiment may be a laminate having a core layer in addition to the adhesive resin layer and the adjacent layer. For example, an adhesive film 30 shown in FIG. 3 has the adhesive resin layer 11 on one surface of a core layer 13 with the adjacent layer 12 therebetween. An adhesive film 40 shown in FIG. 4 has the adhesive resin layer 11 on both surfaces of the core layer 13 with the adjacent layer 12 therebetween.

The adhesive resin layer 11 is a layer that is disposed on at least one surface of the adhesive films 10, 20, 30, and 40 to establish contact or adhesion with an adherend (not shown). The adhesive resin layer 11 contains a modified polyolefin resin modified with a functional group that forms a chemical bond with an adherend. Since the modified polyolefin resin has high adhesiveness, it is an essential component for imparting adhesiveness to the adhesive resin layer 11.

Examples of modified polyolefin resins used in the adhesive resin layer 11 include one or more of acid-modified polyolefin resins, hydroxy modified polyolefin resins, chlorinated polyolefin resins, and epoxy modified polyolefin resins.

Among the modified polyolefin resins, an acid-modified polyolefin resin modified with an unsaturated carboxylic acid component is preferable. The modified polyolefin resin of the adhesive resin layer 11 preferably contains 0.01 to 2 parts by weight of the unsaturated carboxylic acid component with respect to 100 parts by weight of the modified polyolefin resin.

The amount of the unsaturated carboxylic acid component contained in the modified polyolefin resin may be determined from the amount of acid functional group-containing monomers used in a process of producing an acid-modified polyolefin resin or may be determined from the amount of an acid contained in the modified polyolefin resin. The method of measuring the amount of an acid contained in the modified polyolefin resin is not particularly limited, and for example, titration using an alkali such as potassium hydroxide (KOH) may be used, or acid functional groups may be converted into methyl esters and quantified by NMR or the like.

As a method of quantifying the amount of acid components contained in the resin by ¹H-NMR, for example, a method in which ¹H-NMR measurement using a sample of a modified resin such as modified PP and ¹H-NMR measurement after converting unsaturated carboxylic acid moieties such as maleic acid into methyl esters are performed, and the grafting rate (unit of mass%) is calculated from the difference in the ¹H peak areas is an exemplary example.

The unsaturated carboxylic acid component may be a carboxy group-containing monomer having a free carboxylic acid group or an acid anhydride group-containing monomer having a latent carboxylic acid group. Examples of carboxy group-containing monomers include α,β-unsaturated carboxylic acid monomers such as acrylic acid, methacrylic acid, maleic acid, nadic acid, fumaric acid, itaconic acid, citraconic acid, crotonic acid, isocrotonic acid, tetrahydrophthalic acid, and endo-bicyclo[2.2.1]-5-heptene-2,3-dicarboxylic acid (endic acid). Examples of acid anhydride group-containing monomers include unsaturated dicarboxylic anhydride monomers such as maleic anhydride, nadic anhydride, itaconic anhydride, citraconic anhydride, and endic anhydride. The modified polyolefin resin may be a resin obtained by copolymerizing one unsaturated carboxylic acid component or a resin obtained by copolymerizing two or more unsaturated carboxylic acid components.

Examples of methods of producing a modified polyolefin resin include a method of graft-modifying an unmodified polyolefin resin with a functional group-containing monomer by melt-kneading and a method of copolymerizing olefin monomers and functional group-containing monomers.

The functional group-containing monomer is a monomer having a polar functional group other than olefins, and specific examples thereof include unsaturated carboxylic acid components, hydroxy group-containing olefins, chlorinated olefins, and epoxy group-containing olefins. These functional group-containing olefins may be alkyl (meth)acrylate monomers having functional groups.

Examples of polar functional groups of functional group-containing monomers include a carboxylic acid group, a carboxylic acid anhydride group, a hydroxy group, a chlorine atom, and an epoxy group. These functional groups may be functional groups that form chemical bonds with adherends.

As at least one modified polyolefin resin, an acid-modified polyolefin resin obtained by graft-modification of an unsaturated carboxylic acid component using a radical polymerization initiator can be used. Examples of radical polymerization initiators include organic peroxides and aliphatic azo compounds.

Examples of olefin monomers used in modified polyolefin resins include one or more of ethylene, propylene, 1-butene, isobutylene, 1-hexene, 1-octene, and **α**-olefins. The modified polyolefin resin may be a metallocene-based resin polymerized using a metallocene catalyst.

Examples of modified polyolefin resins include modified polyethylene resins, modified polypropylene resins, modified poly-1-butene resins, and modified polyisobutylene resins. Examples of unmodified polyolefin resins used for graft-modification of modified polyolefins include polyethylene, polypropylene, poly-1-butene, polyisobutylene, random copolymers of propylene and ethylene or **α**-olefins, and block copolymers of propylene and ethylene or **α**-olefins.

The modified polyethylene resin used in the adhesive resin layer 11 is preferably a resin obtained by copolymerizing 50 parts by weight or more of ethylene with respect to 100 parts by weight of the modified polyethylene resin. A functional group-containing monomer such as an unsaturated carboxylic acid component is copolymerized into the modified polyethylene resin. In addition, the modified polyethylene resin may be copolymerized with propylene, 1-butene, 1-hexene, 1-octene or the like as an olefin monomer other than ethylene.

The modified polypropylene resin used in the adhesive resin layer 11 is preferably a resin obtained by copolymerizing 50 parts by weight or more of propylene with respect to 100 parts by weight of the modified polypropylene resin. The modified polypropylene resin is copolymerized with a functional group-containing monomer such as an unsaturated carboxylic acid component. In addition, the modified polypropylene resin may be copolymerized with ethylene, 1-butene, 1-hexene, 1-octene or the like as an olefin monomer other than propylene.

In the adhesive films 10, 20, 30, and 40 according to the embodiments, the thickness of the adhesive resin layer 11 is less than **10 µm**. Thereby, it is possible to apply the physical properties of the adjacent layer 12 to the adherend, and it is possible to improve the degree of freedom in design.

In addition, the modified polyolefin resin such as an acid-modified polyolefin resin used in the adhesive resin layer 11 is more expensive than the polyolefin resin, but cost reduction can be achieved by reducing the amount of the modified polyolefin resin used.

In addition, by reducing the proportion of the acid-modified polyolefin resin or the like (a resin with high polarity) used in the adhesive resin layer 11, it is possible to reduce the water vapor permeability of the adhesive films 10, 20, 30, and 40 and improve the water vapor barrier property.

The adjacent layer 12 is a resin layer adjacent to the adhesive resin layer 11 and contains a polyolefin resin. The polyolefin resin of the adjacent layer 12 is preferably a polyolefin resin (unmodified polyolefin resin) that has not been modified with a polar functional group such as carboxylic acid.

The polyolefin resin of the adjacent layer 12 may be a polyethylene resin, a polypropylene resin, a poly-1-butene resin, a polyisobutylene resin or the like. Specific examples of polyolefin resins include polyethylene, polypropylene, poly-1-butene, polyisobutylene, random copolymers of propylene and **ethylene or α**-olefins, and block copolymers of propylene and **ethylene or α**-olefins. A polyethylene resin, a polypropylene resin and the like are preferable in consideration of low cost.

Examples of olefin monomers used in the polyolefin resin of the adjacent layer 12 include one or more of ethylene, propylene, 1-butene, isobutylene, 1-hexene, 1-octene, and **α**-olefins.The polyolefin resin may be a metallocene-based resin polymerized using a metallocene catalyst.

It is preferable that the adjacent layer 12 alleviate stress and minimize a decrease in adhesive strength when an external force acts in a direction in which the adhesive films 10, 20, 30, and 40 peel off while the adhesive films 10, 20, 30, and 40 are bonded to the adherend. Therefore, it is preferable that the adjacent layer 12 contain a flexible polyolefin resin. Specifically, the tensile elastic modulus of the adjacent layer 12 is preferably 1,000 MPa or less. In order to reduce the tensile elastic modulus of the adjacent layer 12, it is preferable to use a polyolefin resin having a low tensile elastic modulus as a single resin.

It is preferable that the adjacent layer 12 have a thickness equal to or larger than that of the adhesive resin layer 11. When the thickness of the adhesive resin layer 11 is A, and the thickness of the adjacent layer 12 is B, the ratio B/A is preferably 1 to 20.

The acid-modified polyolefin resin of the adhesive resin layer 11 is preferably a random copolymer of polypropylene or a resin modified from polyethylene. In addition, the polyolefin resin of the adjacent layer 12 is preferably a random copolymer of unmodified polypropylene, or unmodified polyethylene. A random copolymer of polypropylene (random polypropylene) has many amorphous moieties due to copolymerization with co-monomers such as ethylene and has excellent flexibility like polyethylene.

A random polypropylene may be used for both the adhesive resin layer 11 and the adjacent layer 12. In addition, a polyethylene may be used for both the adhesive resin layer 11 and the adjacent layer 12. In addition, a random polypropylene may be used for any one of the adhesive resin layer 11 and the adjacent layer 12, and a polyethylene may be used for the other. In these cases, a modified resin may be used for the adhesive resin layer 11, and an unmodified resin may be used for the adjacent layer 12. The random polypropylene may be a metallocene-based resin or a resin using a catalyst other than metallocene.

The adhesive resin layer 11 preferably contains 70 parts by weight or more of the modified polyolefin resin when the total amount is 100 parts by weight. The adhesive resin layer 11 may contain the thermoplastic elastomer resin in a range of 5 to 30 parts by weight when the total amount is 100 parts by weight.

The thermoplastic elastomer resin used in the adhesive resin layer 11 is preferably an elastomer whose main component is a hydrocarbon monomer that is highly compatible with the modified polyolefin resin, and specific examples thereof include styrene-based elastomers and olefin-based elastomers. The thermoplastic elastomer resin may be a modified elastomer resin such as an acid-modified elastomer resin.

Examples of styrene-based elastomers include one or more of styrene-ethylenepropylene-styrene block copolymers (SEPS), styrene-ethylene-butylene-styrene block copolymers (SEBS), styrene-butadiene-styrene block copolymers (SBS), styrene-isoprene-styrene block copolymers (SIS), styrene-isoprene-butadiene-styrene block copolymers (SIBS), styrene-ethylene-butylene-olefin crystal block copolymers (SEBC), and hydrogenated styrene-butadiene rubber (HSBR).

Examples of olefin-based copolymers that can be used for olefin-based elastomers include aliphatic olefin copolymers such as propylene-ethylene copolymers, ethylene-1-butene copolymers, ethylene-1-hexene copolymers, ethylene-1-octene copolymers, propylene-ethylene-1-butene copolymers, and propylene-1-butene copolymers.

The adjacent layer 12 preferably contains 70 parts by weight or more of the polyolefin resin when the total amount is 100 parts by weight. The adjacent layer 12 may contain the thermoplastic elastomer resin in a range of 5 to 30 parts by weight when the total amount is 100 parts by weight.

The thermoplastic elastomer resin used in the adjacent layer 12 is preferably an elastomer whose main component is a hydrocarbon monomer that is highly compatible with the modified polyolefin resin, and specific examples thereof include styrene-based elastomers and olefin-based elastomers.

When the adhesive films 30 and 40 have the core layer 13, the core layer 13 is not particularly limited, but is preferably a resin layer containing a polyolefin resin. The thickness of the core layer 13 is not particularly limited, and may be designed so that the total thickness of the adhesive films 30 and 40 is, for example, in a range of 50 to 500 **µm**. When the core layer 13 is formed from a resin having a higher melting point than the adhesive resin layer 11 and the adjacent layer 12, this is preferable because the heat resistance of the adhesive films 30 and 40 is improved.

Examples of polyolefin resins of the core layer 13 include polyethylene, polypropylene, poly-1-butene, polyisobutylene, and random copolymers of propylene and **ethylene or α**-olefins, and block copolymers of propylene and **ethylene or α**-olefins. Polyethylene, polypropylene, and the like are preferable in consideration of low cost. Among these, polypropylene is preferable because it has excellent flexibility.

Although not particularly illustrated, when the adhesive resin layer 11 containing a modified polyolefin resin is provided on one surface of the adhesive films 10 and 30, the adhesive films 10 and 30 may have another adhesive layer on the surface opposite to the adhesive resin layer 11. The adhesive resin used in the adhesive layer other than the adhesive resin layer 11 is not particularly limited, but examples thereof include acid-modified polyolefins, epoxy-based adhesives, and olefin-based heat sealants.

Respective layers constituting the adhesive films 10, 20, 30, and 40, that is, the adhesive resin layer 11, the adjacent layer 12, the core layer 13 and the like, may contain various additives such as an antioxidant, an ultraviolet absorber, an antistatic agent, a lubricant, an antiblocking agent, and an epoxy resin according to a desired purpose. Any one of the adhesive resin layer 11, the adjacent layer 12, and the core layer 13 may have a composition that does not contain any one or more of these additives or does not contain any of them.

A method of producing the adhesive films 10, 20, 30, and 40 is not particularly limited, and examples thereof include a method of forming respective layers or laminating respective layers by extrusion molding, inflation molding, heat lamination, extrusion lamination, dry lamination or the like.

For example, when the adhesive films 10 and 20 having the adhesive resin layer 11 and the adjacent layer 12 are produced, the adhesive resin layer 11 may be molded first, the adjacent layer 12 may be molded first, and the adhesive resin layer 11 and the adjacent layer 12 may be molded at the same time. A method of laminating the adhesive resin layer 11 and the adjacent layer 12 so that they are adjacent to each other is not particularly limited, for example, they may be made to be adjacent to each other by coextrusion molding. The same applies to the relationship between the adhesive resin layer 11 and the adjacent layer 12 when the adhesive films 30 and 40 having the core layer 13 are produced.

When the adhesive films 30 and 40 having the core layer 13 are produced, the adhesive resin layer 11, the adjacent layer 12, and the core layer 13 may be molded in any order, and the adhesive resin layer 11, the adjacent layer 12 and the core layer 13 may be molded at the same time. The adhesive resin layer 11 and the adjacent layer 12 may be molded at the same time and then laminated with the core layer 13, or the adhesive resin layer 11, the adjacent layer 12 and the core layer 13 may be laminated by coextrusion molding. The core layer 13 and the adjacent layer 12 may be laminated so that they are adjacent to each other. Another layer may be interposed between the core layer 13 and the adjacent layer 12.

When the adhesive films 20 and 40 having the adhesive resin layer 11 on both surfaces are produced, the adhesive resin layers 11 on the surfaces may be laminated by the same method or may be laminated by different methods. The adhesive resin layers 11 on both surfaces may be resin layers having different compositions or thicknesses or may be resin layers having the same composition or thickness.

The adherends of the adhesive films 10, 20, 30, and 40 are not particularly limited, and examples thereof include various materials such as resins, rubber, metals, glass, and ceramics. Since the adhesive resin layer 11 contains a modified polyolefin resin as an essential component, it can be suitably adhered even if the adherend is a metal or the like. Examples of metals include, but are not particularly limited, iron, copper, aluminum, stainless steel, chromium, and nickel. The surface of the adherend may be a treated surface that has been subjected to a surface processing treatment such as uneven processing or a chemical conversion treatment. The adherend may have a planar shape different from that of the adhesive films 10, 20, 30, and 40.

The adherends of the adhesive films 10, 20, 30, and 40 may be metal terminals. The adhesive films 10, 20, 30, and 40 may be used for sealing metal terminals. For example, in a secondary battery, the adhesive films 10, 20, 30, and 40 may be used as a sealing film between the battery container and the metal terminal. The sealing film may be made into an elongated tape form, and disposed along the periphery of the battery container in the length direction. The metal terminal may protrude in a direction intersecting the periphery of the battery container. Both ends of the metal terminal in the length direction are disposed on the outside and inside of the battery container.

The metal terminal has a main body formed of a known metal such as aluminum, copper, nickel, iron, gold, platinum, or various alloys. The surface of the metal terminal may have a plating layer formed of a metal different from that of the main body. The metal terminal may have a surface treatment layer formed by a chemical conversion treatment of a metal or may have a coating layer formed by applying a resin or the like.

Examples of surface treatment layers include an acid-resistant coating formed using one or more of phosphates, chromates, fluorides, and triazinethiol compounds. Phosphates, chromates, and fluorides may be metal salts. Examples of coating layers include application layers of coating agents containing resins such as polyvinyl alcoholbased resins and polyvinyl ether-based resins.

Examples of battery containers used for secondary batteries include exterior containers using laminates such as resin films and laminated films. The exterior laminate may have one or more resin substrate layers, a metal foil, and a sealant resin layer.

Preferable examples of resin substrates for the exterior laminate include polyamide-based resins such as nylon, polyester-based resins such as polyethylene terephthalate (PET), polyolefin-based resins such as polypropylene, and phenolic resins.

The metal foil for the exterior laminate is not particularly limited, and an aluminum foil, a stainless steel foil, a copper foil, and an iron foil are preferable.

The sealant resin layer of the exterior laminate can be thermally fused with the sealing film. Examples of sealant resins for the exterior laminate include polypropylene-based resins and polyethylene-based resins. Examples of polypropylene-based resins include polypropylene homopolymers and copolymers of propylene and ethylene. Examples of polyethylene-based resins include low-density polyethylene and linear low-density polyethylene.

When the adhesive films 10, 20, 30, and 40 according to the embodiments are used as a sealing film for a secondary battery, the adhesive resin layer 11 containing a modified polyolefin resin may be thermally fused to the surface of the metal terminal. When the adhesive resin layer 11 is formed on both surfaces of the sealing film, the adhesive resin layer 11 may be thermally fused to the sealant resin layer of the exterior laminate. When the adhesive resin layer 11 is formed on one surface of the sealing film, and another adhesive layer is formed on the surface opposite thereto, the other adhesive layer may be thermally fused to the sealant resin layer of the exterior laminate.

While the present invention has been described above based on preferred embodiments, the present invention is not limited to the above embodiments, and various modifications can be made without departing from the spirit and scope of the present invention.

### [Examples]

The present invention will be described in detail with reference to examples, but the present invention is not limited to these examples.

In order to produce adhesive films, a method of forming a film by coextrusion molding in a multilayer casting machine so that an adhesive resin layer, an adjacent layer, and a core layer had thicknesses shown in Table 1 was used. The following resins were used to produce adhesive films. Here, PP indicates polypropylene, PE indicates polyethylene, and LLDPE indicates linear-low density polyethylene.

(A)-1: Acid-modified PP (random copolymer, a melting point of 130 to 140°C, a tensile elastic modulus of 1,000 MPa, a degree of acid modification with an unsaturated carboxylic acid of 0.08 wt%)
(A)-2: Acid-modified PP (metallocene-based, random copolymer, a melting point of 120 to 130°C, a tensile elastic modulus of 750 MPa, a degree of acid modification with an unsaturated carboxylic acid of 0.07 wt%)
(A)-3: Acid-modified PE (LLDPE, a melting point of 125°C, a tensile elastic modulus of 45 MPa, a degree of acid modification with an unsaturated carboxylic acid of 0.15 wt%)

(B)-1: PP (random copolymer, a melting point of 130 to 140°C, a tensile elastic modulus of 1,000 MPa)
(B)-2: PP (metallocene-based, random copolymer, a melting point of 120 to 130°C, a tensile elastic modulus of 750 MPa)
(B)-3: Thermoplastic elastomer (metallocene-based, a tensile elastic modulus of 320 MPa)
(B)-4: PE (LLDPE, a melting point of 125°C, a tensile elastic modulus of 300 MPa)

(C)-1: PP (block copolymer, a melting point of 160 to 165°C, a tensile elastic modulus of 1,070 MPa)

In the core layer column, "-" indicates that the adhesive film had no core layer. In the structure column, "one surface" indicates that the adhesive film had the adhesive resin layer only on one surface. "Both surfaces" indicates that the adhesive film had the adhesive resin layers on both surfaces as shown in FIG. 2 (without the core layer) or FIG. 4 (with the core layer).

**[Table 1]**

| | Adhesive resin layer | | Adjacent layer | | Core layer | | Adhesive film | |
|---|---|---|---|---|---|---|---|---|
| | Compone nt | Thickne ss [µm] | Compone nt | Thickne ss [µm] | Compone nt | Thickne ss [µm] | Total thickne ss [µm] | Structu re |
| Example 1 | (A)-1 | 8 | (B)-1 | 24 | (C)-1 | 36 | 100 | Both surface s |
| Example 2 | (A)-1 | 8 | (B)-1 | 8 | (C)-1 | 64 | 100 | Both surface s |
| Example 3 | (A)-1 | 5 | (B)-1 | 95 | - | - | 100 | One surface |
| Example 4 | (A)-1 | 3 | (B)-1 | 24 | (C)-2 | 46 | 100 | Both surface s |
| Example 5 | (A)-1 | 8 | (B)-2 | 24 | (C)-1 | 36 | 100 | Both surface s |
| Example 6 | (A)-1 | 8 | (B)-3 | 24 | (C)-1 | 36 | 100 | Both surface s |
| Example 7 | (A)-2 | 8 | (B)-1 | 24 | (C)-1 | 36 | 100 | Both surface s |
| Example 8 | (A)-2 | 8 | (B)-2 | 24 | (C)-1 | 36 | 100 | Both surface s |
| Example 9 | (A)-3 | 8 | (B)-4 | 92 | - | - | 100 | One surface |
| Example 10 | (A)-1 | 8 | (B)-1 | 42 | (C)-1 | 100 | 200 | Both surface s |
| Example 11 | (A)-1 | 8 | (B)-1 | 82 | (C)-1 | 120 | 300 | Both surface s |
| Comparati ve Example 1 | (A)-1 | 25 | (C)-1 | 50 | - | - | 100 | Both surface s |
| Comparati ve Example 2 | (B)-1 | 8 | (B)-2 | 24 | (C)-1 | 36 | 100 | Both surface s |

### (Adhesive strength evaluation method)

An adhesive film was cut to a width of 10 mm, and an **aluminum plate (400 µm** thickness×50×50 mm) was inserted as an adherend so that the adhesive resin layer of the adhesive film was on the side of the adherend, and thermally compressed under conditions of a temperature of 170°C, a pressure of 0.1 MPa, and a time of 10 sec to produce a sample. Using a tensile testing machine (Autograph (registered trademark) AG-X20kN, commercially available from Shimadzu Corporation), the adhesive film with a width of 10 mm was peeled off from the adherend at a tensile speed of 300 mm/min by a 180° peeling method, and the adhesive strength was measured. If the adhesive strength was high, the adhesiveness was **good (∘)**, and if the adhesive strength was low, the adhesiveness was poor (×).

### (Shape conformability evaluation method)

For the samples produced using the adhesive strength evaluation method, the end of the aluminum plate as the adherend was observed under magnification, and it was determined whether there was any raising between the aluminum plate and the adhesive film. If there was no raising, the shape conformability was **good (o)**, and if there was raising, the shape conformability was poor (×).

### (Water vapor permeability evaluation method)

Using an API-MS method (Atmospheric Pressure lonization Mass Spectrometry) shown in URL (https://www.scas.co.jp/scas-news/sn-back-issues/pdf/45/SCASNEWS2017-1 web p15-18.pdf), the water vapor permeability was evaluated by the following procedure.
(1) A sample was placed in a transmission cell, and high-purity nitrogen was aerated through a supply side and a transmission side.
(2) A gas discharged from the transmission cell on the transmission side was measured using API-MS, and it was confirmed that the target component, water vapor, had been removed.
(3) Nitrogen containing a known amount of water vapor was introduced into the transmission cell on the supply side, and the amount of water vapor discharged from the transmission cell on the transmission side was measured.
(4) The state in which the transmission amount per unit time became constant was defined as a steady state, and the water vapor permeability was evaluated from the amount of water vapor detected in the steady state.

If the water vapor permeability was low, the water vapor barrier property was good (o), and if the water vapor permeability was high, the water vapor barrier property was poor (×).

### (Cost evaluation method)

Since the acid-modified polyolefin was expensive, if the amount of the acid-modified polyolefin used per one adhesive resin layer corresponded to the thickness of less than **10 µm**, the cost was **good** (o), and if the amount corresponded to the thickness of **10 µm or more**, the cost was poor (×).

**[Table 2]**

| | Adhesiveness | Shape conformability | Water vapor barrier property | Cost |
|---|---|---|---|---|
| Example 1 | ○ | ○ | ○ | ○ |
| Example 2 | ○ | ○ | ○ | ○ |
| Example 3 | ○ | ○ | ○ | ○ |
| Example 4 | ○ | ○ | ○ | ○ |
| Example 5 | ○ | ○ | ○ | ○ |
| Example 6 | ○ | ○ | ○ | ○ |
| Example 7 | ○ | ○ | ○ | ○ |
| Example 8 | ○ | ○ | ○ | ○ |
| Example 9 | ○ | ○ | ○ | ○ |
| Example 10 | ○ | ○ | ○ | ○ |
| Example 11 | ○ | ○ | ○ | ○ |
| Comparative Example 1 | ○ | ○ | × | × |
| Comparative Example 2 | × | × | ○ | ○ |

The evaluation results are shown in Table 2.

The adhesive films of Examples 1 to 11 were evaluated as **good (∘)** in all items in Table 2.

In the adhesive film of Comparative Example 1 in which the thickness of the adhesive resin layer was thick, the water vapor barrier property and cost were poor (×).

In the adhesive film of Comparative Example 2 in which the unmodified PP was used in the adhesive resin layer, the adhesiveness and shape conformability were poor (×).

### [Reference Signs List]

10, 20, 30, 40 Adhesive film
11 Adhesive resin layer
12 Adjacent layer
13 Core layer

## Claims

1. An adhesive film formed of a resin laminate, having,
on at least one surface of the adhesive film, an adhesive resin layer containing a modified polyolefin resin modified with a functional group that forms a chemical bond with an adherend; and
an adjacent layer adjacent to the adhesive resin layer and containing a polyolefin resin,
wherein the adhesive resin layer has a thickness of less than **10 µm**.

2. The adhesive film according to claim 1,
wherein the adjacent layer has a tensile elastic modulus of 1,000 MPa or less.

3. The adhesive film according to claim 1 or 2,
wherein the ratio B/A of the thickness B of the adjacent layer to the thickness A of the adhesive resin layer is 1 to 20.

4. The adhesive film according to any one of claims 1 to 3,
wherein the modified polyolefin resin is an acid-modified polyolefin resin.

5. The adhesive film according to claim 4,
wherein the acid-modified polyolefin resin is a random copolymer of polypropylene or a resin modified from polyethylene.

6. The adhesive film according to any one of claims 1 to 5,
wherein the polyolefin resin of the adjacent layer is a random copolymer of unmodified polypropylene or unmodified polyethylene.

7. The adhesive film according to any one of claims 1 to 6,
wherein the modified polyolefin resin is modified with an unsaturated carboxylic acid component, and contains 0.01 to 2 parts by weight of the unsaturated carboxylic acid component with respect to 100 parts by weight of the modified polyolefin resin.

8. The adhesive film according to any one of claims 1 to 7, which contains a thermoplastic elastomer resin in a range of 5 to 30 parts by weight with respect to 100 parts by weight of the adhesive resin layer.

9. A metal terminal for a secondary battery, comprising the adhesive film according to any one of claims 1 to 8.

10. A secondary battery comprising the metal terminal according to claim 9.
